# EUROPEAN PATENT SPECIFICATION

(11) **EP 1 825 778 B1**
(45) Date of publication and mention of the grant of the patent: **16.04.2008**
(21) Application number: 06002994.9
(22) Date of filing: 15.02.2006
(51) Int. Cl.: A47B 47/00, F16B 12/00

(54) **Furniture having reinforced strength**
Möbel mit verstärkter Festigkeit
Meuble avec résistance renforcée

(43) Date of publication of application: 29.08.2007
(73) Proprietor: Kadeya Enterprise Co., Ltd., Yuan Lin Chen Chang hua Hsien (TW)
(72) Inventor: Lai, Chun-Yi, Kadeya Enterprise Co. Ltd., Lin Tso Li Yuan Lin Chen Chang hua Hsien (TW)
(74) Representative: Reichel, Wolfgang

(56) References cited:
- WO-A-20/05002394
- DE-U1- 8 800 251
- DE-U1- 9 319 660
- US-A- 5 255 413
- US-A- 5 470 139
- US-A1- 2004 004 417

## Description

The present invention relates to a furniture such as a cabinet, a cupboard, a case or the like, and more particularly to a furniture having a reinforced strength.

A conventional furniture comprises a plurality of mounting plates made of metallic or wooden material. When the mounting plates are made of metallic material, the mounting plates made of metallic material are heavy, thereby increasing the whole weight of the furniture. In addition, the furniture has a fixed outer appearance, thereby decreasing the aesthetic quality of the furniture. Alternatively, when the mounting plates are made of wooden material, the price is expensive, thereby greatly increasing costs of fabrication. In addition, the furniture has a fixed outer appearance, thereby decreasing the aesthetic quality of the furniture.

WO 2005/002394 A discloses a furniture system with at least one main frame having a periphery provided with a plurality of connecting elements, a plurality of panels mounted an the periphery of the main frame and located between the connecting elements; a plurality of reinforcing strips mounted between the connecting elements and extended through the panels to secure the panels to the connecting elements; wherein each of the connecting elements has a side formed with a plurality of mounting holes, each of the panels has an inside formed with a plurality of through holes, and each of the reinforcing strips is extended through a respective one of the through holes of each of the panels and has two ends each inserted into a respective one of the mounting holes of each of the connecting elements.

In accordance with the present invention, there is provided a furniture with the features of claim 1.

The primary objective of the present invention is to provide a furniture, wherein the reinforcing strips are extended through the panels to reinforce the strength of the panels, thereby enhancing the strength of the main frame.

Another objective of the present invention is to provide a furniture, wherein the reinforcing strips are extended through the panels to secure the panels to the hollow pipes, and the hollow pipes are connected with each other by the mounting blocks, so that the furniture is assembled easily and rapidly, thereby facilitating a user mounting the furniture, and thereby decreasing costs of fabrication.

A further objective of the present invention is to provide a furniture, wherein the hollow pipes and the panels have light weight, thereby decreasing the whole weight of the furniture.

A further objective of the present invention is to provide a furniture, wherein each of the panels has a surface formed with patterns, stripes or the like to enhance the aesthetic quality of each of the panels, so that the furniture has an outstanding outer appearance.

A further objective of the present invention is to provide a furniture, wherein each of the panels can be replaced arbitrarily so as to change the outer appearance of the furniture.

Further benefits and advantages of the present invention will become apparent after a careful reading of the detailed description with appropriate reference to the accompanying drawings.

In the drawings:
Fig. 1 is a perspective view of a furniture in accordance with the preferred embodiment of the present invention.
Fig. 2 is a partially exploded perspective view of the furniture as shown in Fig. 1.
Fig. 3 is a partially plan cross-sectional view of the furniture as shown in Fig. 1.
Fig. 4 is a partially plan cross-sectional view of the furniture in accordance with another preferred embodiment of the present invention.
Fig. 5 is a partially exploded perspective view of the furniture in accordance with another preferred embodiment of the present invention.
Fig. 6 is a partially exploded perspective view of the furniture in accordance with another preferred embodiment of the present invention.
Fig. 7 is a partially exploded perspective view of the furniture in, accordance with another preferred embodiment of the present invention.
Fig. 7A is a perspective enlarged view of a fastener of the furniture as shown in Fig. 7.
Fig. 8 is a perspective view of the furniture in accordance with another preferred embodiment of the present invention.
Fig. 8A is a locally enlarged view of the furniture as shown in Fig. 8.
Fig. 9 is a plan cross-sectional operational view of the furniture as shown in Fig. 8.
Fig. 10 is a partially perspective view of the furniture in accordance with another preferred embodiment of the present invention.
Fig. 11 is a partially perspective view of the furniture in accordance with another preferred embodiment of the present invention.
Fig. 12 is a partially exploded perspective view of the furniture in accordance with another preferred embodiment of the present invention.
Fig. 13 is a plan cross-sectional assembly view of the furniture as shown in Fig. 12.
Fig. 14 is a partially exploded perspective view of the furniture in accordance with another preferred embodiment of the present invention.
Fig. 15 is a plan cross-sectional assembly view of the furniture as shown in Fig. 14.

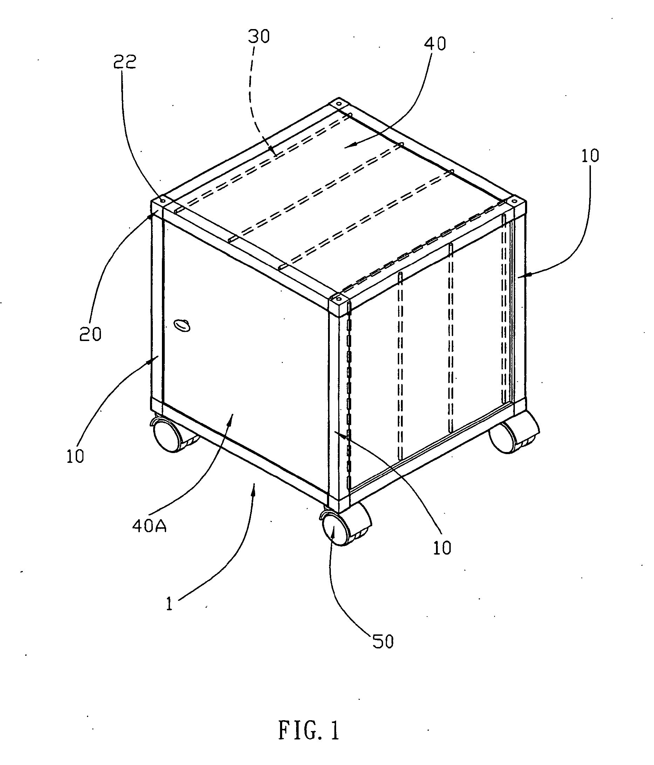

Referring to the drawings and initially to Figs. 1-3, a furniture in accordance with the preferred embodiment of the present invention comprises at least one main frame 1 having a periphery provided with a plurality of hollow pipes 10 connected with each other, a plurality of panels 40 mounted on the periphery of the main frame 1 and located between the hollow pipes 10, a plurality of reinforcing strips 30 mounted between the hollow pipes 10 and extended through the panels 40 to secure the panels 40 to the hollow pipes 10 so as to enhance the strength of the panels 40, and a plurality of castors 50 mounted on a bottom of the main frame 1.

The main frame 1 has a square shape. Each of the hollow pipes 10 is made of metal, paper or plastic material. Each of the hollow pipes 10 has a side formed with a plurality of mounting holes 12 equally distant from each other.

Each of the panels 40 is a paper board, PP board or composite wooden board. Each of the panels 40 has a surface formed with patterns, stripes or the like in a spray painting manner to enhance the aesthetic quality of each of the panels 40. Each of the panels 40 has an inside formed with a plurality of through holes 41 equally distant from each other.

Each of the reinforcing strips 30 is extended through a respective one of the through holes 41 of each of the panels 40 and has two ends each inserted into a respective one of the mounting holes 12 of each of the hollow pipes 10.

The hollow pipes 10 are connected with each other by a plurality of mounting blocks 20. Each of the mounting blocks 20 is provided with a plurality of inserts 21 each inserted into an end portion of a respective one of the hollow pipes 10 so that the hollow pipes 10 are connected with each other by the mounting blocks 20. Each of the mounting blocks 20 has a side formed with a mounting hole 22.

Each of the castors 50 is mounted on the mounting hole 22 of a respective mounting block 20 located at the bottom of the main frame 1.

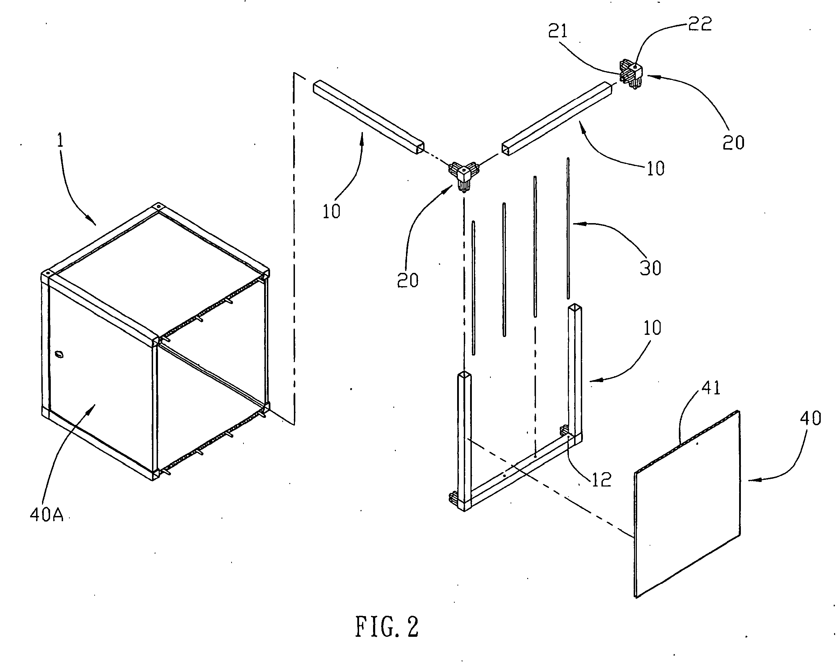

As shown in Figs. 1 and 2, a front panel 40A located at a front side of the main frame 1 is pivotally mounted between the hollow pipes 10 by a respective reinforcing strip 30, so that the front panel 40A is removable to open or close the main frame 1.

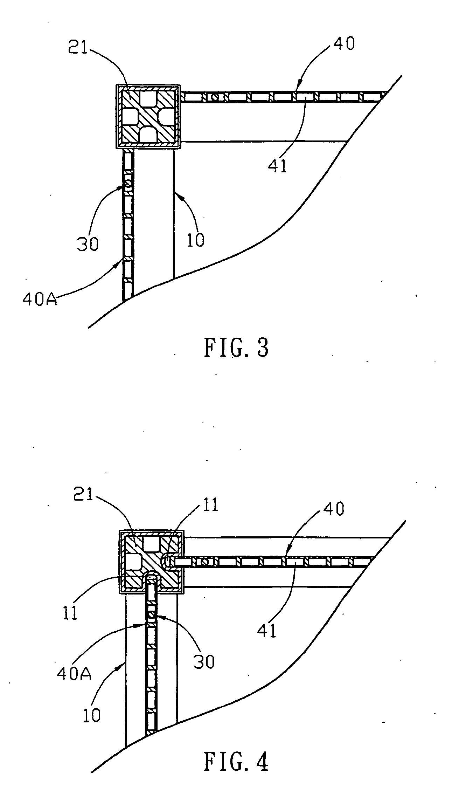

Referring to Fig. 4, each of the hollow pipes 10 has two adjacent sides each formed with an insertion groove 11, and each of the panels 40 has two opposite sides each inserted into the insertion groove 11 of the respective hollow pipe 10, so that each of the panels 40 is mounted between the hollow pipes 10 rigidly and stably. In addition, the front panel 40A is inwardly and upwardly removable between the hollow pipes 10, so that the front panel 40A is removable inwardly and upwardly to open the main frame 1.

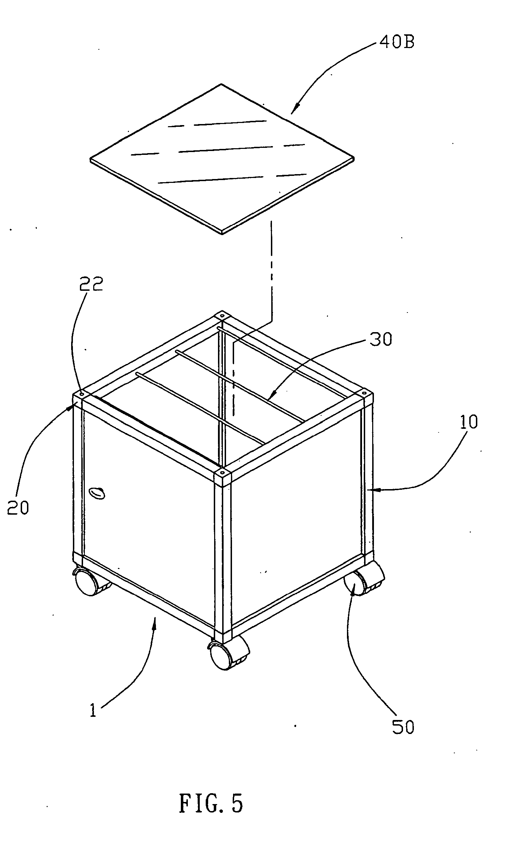

Referring to Fig. 5, an upper (or lower) panel 40B located at a top (or bottom) side of the main frame 1 is removably mounted between the hollow pipes 10 and supported by the respective reinforcing strips 30. Preferably, the upper panel 40B is made of glass material.

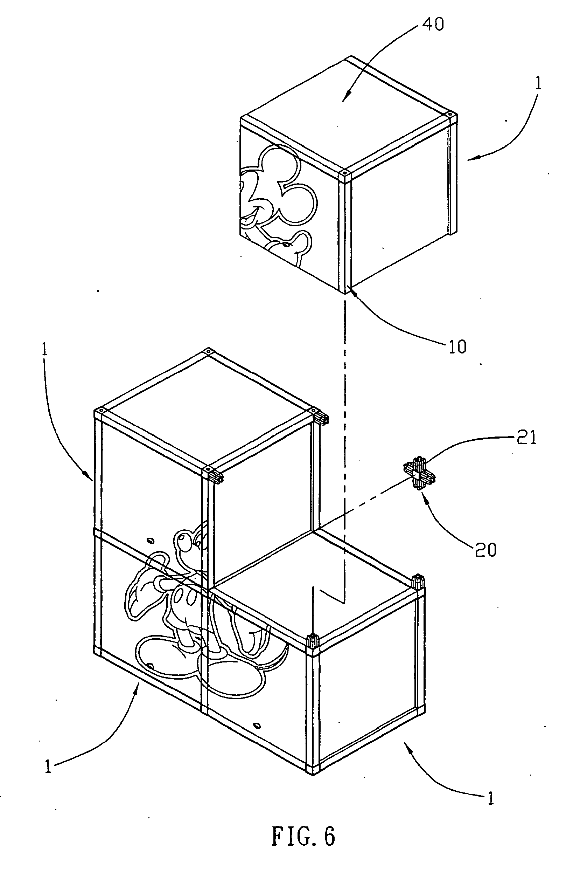

Referring to Fig. 6, the furniture comprises a plurality of main frames 1 laminating each other. The main frames 1 are connected with each other by a plurality of mounting blocks 20 each provided with a plurality of inserts 21.

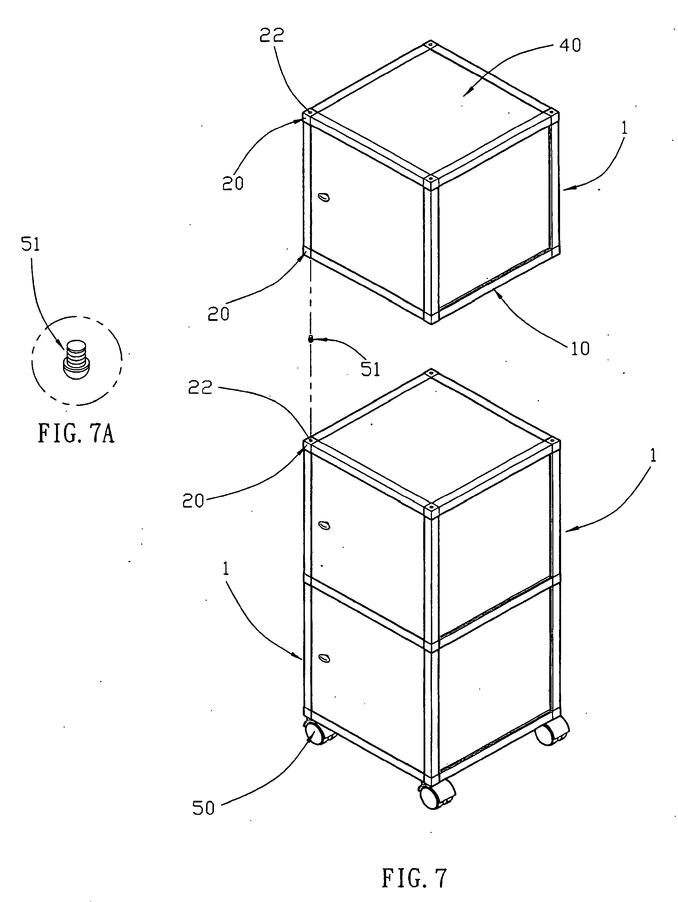

Referring to Figs. 7 and 7A, the furniture further comprises a plurality of fasteners 51 mounted between any two adjacent main frames 1 and each having two end portions each secured in the mounting hole 22 of a respective mounting block 20 of each of the two adjacent main frames 1, so that the two adjacent main frames 1 are assembled rigidly and stably. Thus, all of the main frames 1 are assembled together by the fasteners 51.

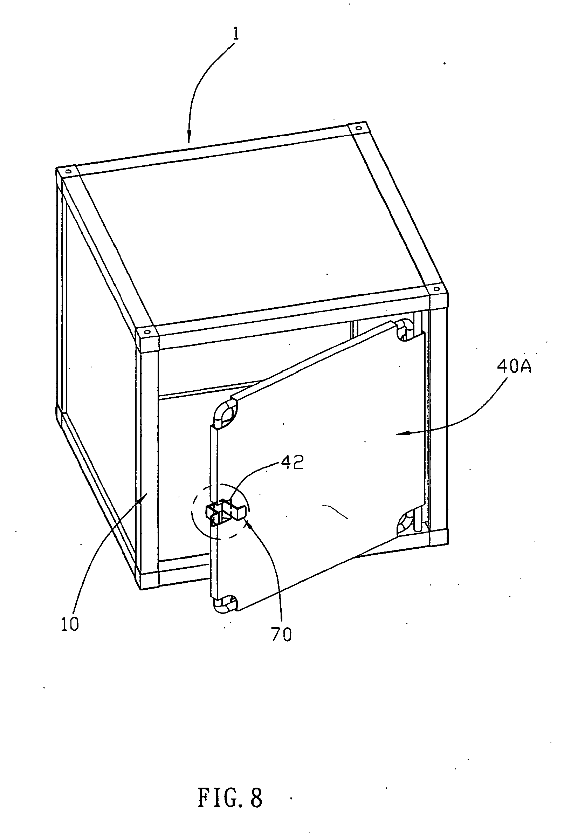

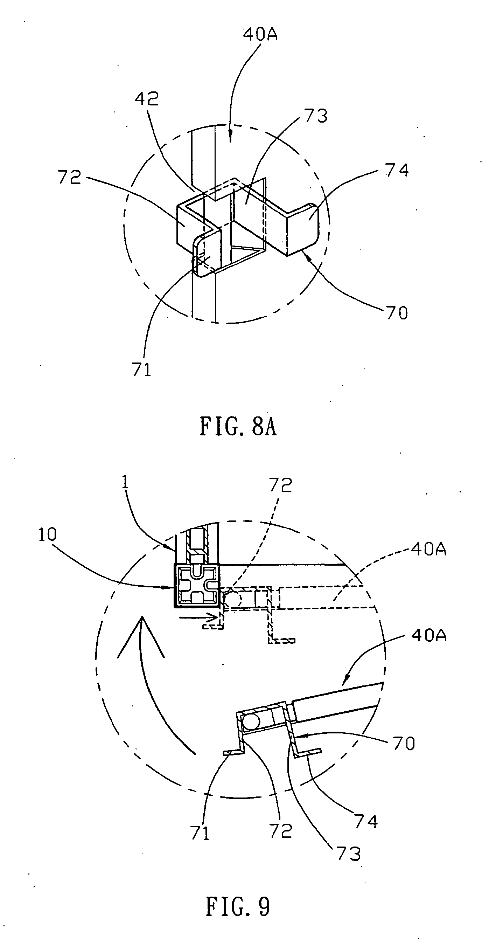

Referring to Figs. 8 and 8A, the front panel 40A is formed with a mounting hole 42 for mounting a door knob 70. The door knob 70 is integrally formed by flexible bent metallic plate. The door knob 70 is substantially U-shaped and has an oblique first side 72 that is movable to press an inner side of a respective hollow pipe 10 and a flat second side 73 located opposite to the first side 72. The first side 72 of the door knob 70 has a distal end formed with an outwardly extended stop portion 71 that is rested on an outer face of the respective hollow pipe 10 when the first side 72 of the door knob 70 presses the inner side of the respective hollow pipe 10 to prevent an excessive movement of the front panel 40A. The second side 73 of the door knob 70 has a distal end formed with an outwardly extended handle portion 74 to facilitate a user moving the front panel 40A.

Referring to Fig. 9, when the front panel 40A is moved to abut the respective hollow pipe 10, the oblique first side 72 of the door knob 70 is pressed inwardly by the inner side of the respective hollow pipe 10 to produce an elastic clamping force on the respective hollow pipe 10, so that the door knob 70 is locked on the respective hollow pipe 10, thereby positioning the front panel 40A on the main frame 1. The handle portion 74 of the door knob 70 is driven by the user to unlock the door knob 70 from the respective hollow pipe 10, thereby removing the front panel 40A from the main frame 1.

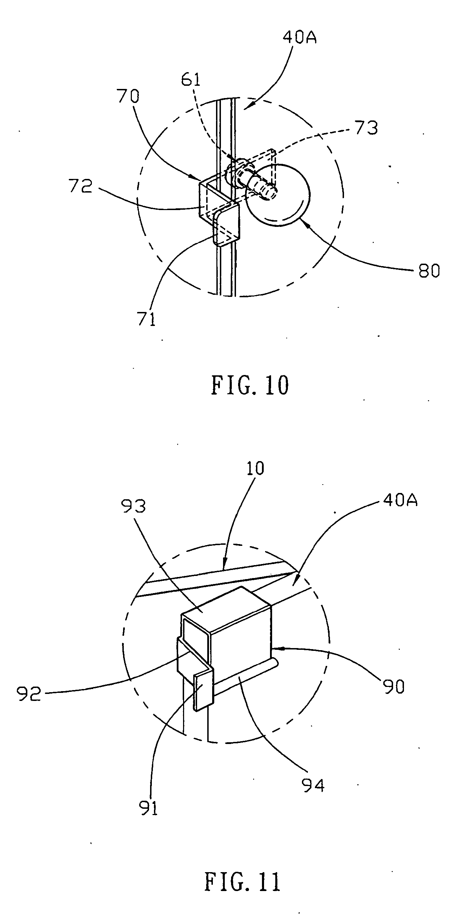

Referring to Fig. 10, the door knob 70 is substantially L-shaped and has an oblique first side 72 that is movable to press an inner side of a respective hollow pipe 10 and a flat second side 73 located perpendicular to the first side 72. The first side 72 of the door knob 70 has a distal end formed with an outwardly extended stop portion 71 that is rested on an outer face of the respective hollow pipe 10 when the first side 72 of the door knob 70 presses the inner side of the respective hollow pipe 10 to prevent an excessive movement of the front panel 40A. The second side 73 of the door knob 70 is provided with an outwardly extended ball seat 80 which is locked by a screw 61 to facilitate a user moving the front panel 40A.

Referring to Fig. 11, the door knob 90 includes a substantially inverted U-shaped mounting plate 93 fitted onto a corner of the front panel 40A and having a first side formed with an oblique press portion 92 that is movable to press an inner side of a respective hollow pipe 10 and a second side formed with a protrusion 94. The press portion 92 of the mounting plate 93 of the door knob 90 has a distal end formed with an outwardly extended stop portion 91 that is rested on an outer face of the respective hollow pipe 10 when the press portion 92 presses the inner side of the respective hollow pipe 10 to prevent an excessive movement of the front panel 40A.

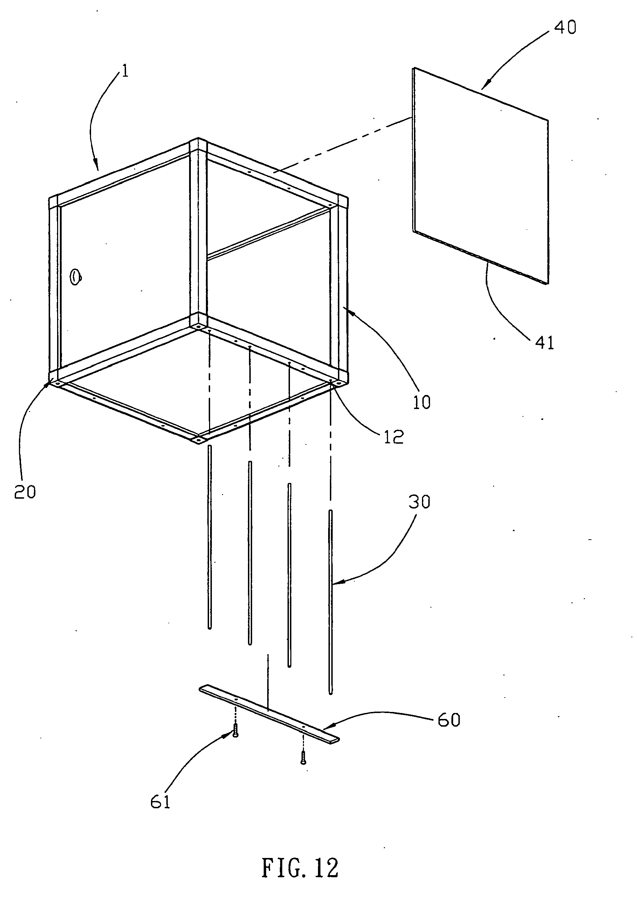

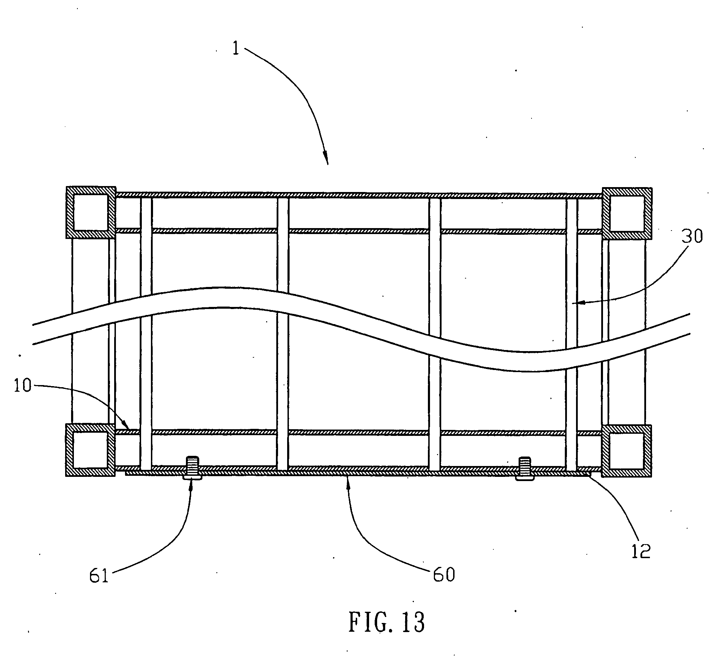

Referring to Figs. 12 and 13, each of the mounting holes 12 is transversely extended through the respective hollow pipe 10 to allow passage of the respective reinforcing strip 30. The furniture further comprises a plurality of catch plates 60 each secured to a respective one of the hollow pipes 10 by a plurality of locking screws 61 and each rested on the respective reinforcing strips 30 to retain the respective reinforcing strip 30 in the respective hollow pipe 10.

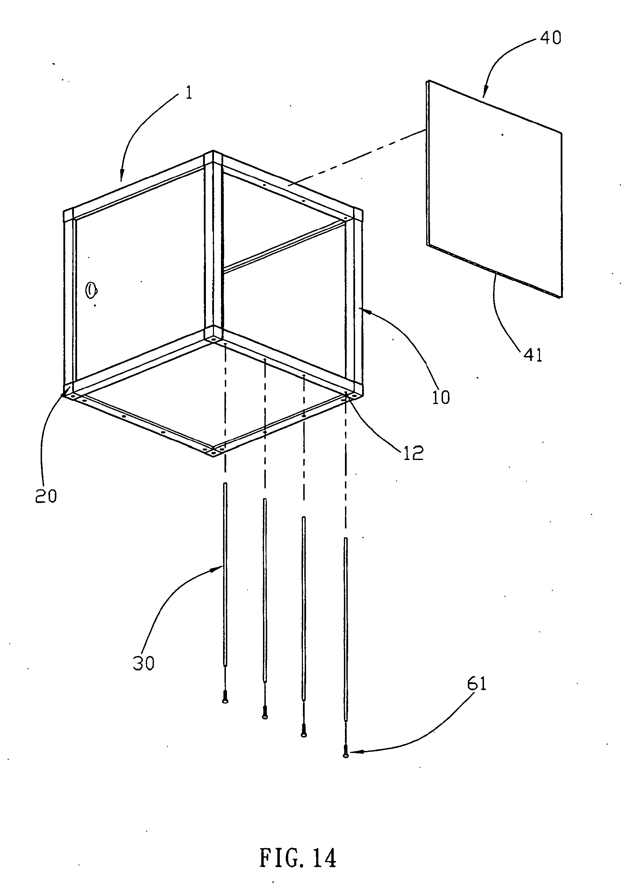

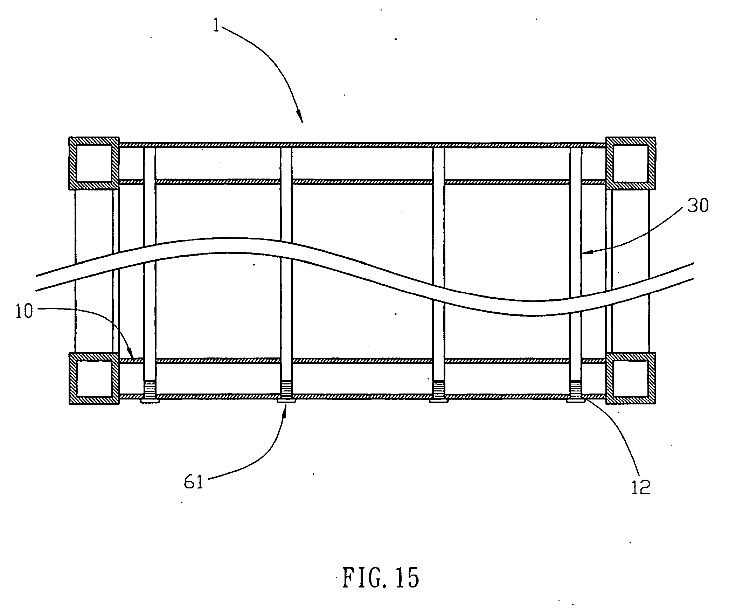

Referring to Figs. 14 and 15, each of the mounting holes 12 is transversely extended through the respective hollow pipe 10 to allow passage of the respective reinforcing strip 30. The furniture further comprises a plurality of locking screws 61 each screwed into a respective one of the mounting holes 12 of the respective hollow pipe 10 and each rested on a respective one of the reinforcing strips 30 to retain the respective reinforcing strip 30 in the respective hollow pipe 10.

Accordingly, the reinforcing strips 30 are extended through the panels 40 to reinforce the strength of the panels 40, thereby enhancing the strength of the main frame 1. In addition, the reinforcing strips 30 are extended through the panels 40 to secure the panels 40 to the hollow pipes 10, and the hollow pipes 10 are connected with each other by the mounting blocks 20, so that the furniture is assembled easily and rapidly, thereby facilitating a user mounting the furniture, and thereby decreasing costs of fabrication. Further, the hollow pipes 10 and the panels 40 have light weight, thereby decreasing the whole weight of the furniture. Further, each of the panels 40 has a surface formed with patterns, stripes or the like to enhance the aesthetic quality of each of the panels 40, so that the furniture has an outstanding outer appearance. Further, each of the panels 40 can be replaced arbitrarily so as to change the outer appearance of the furniture.

Although the invention has been explained in relation to its preferred embodiments as mentioned above, it is to be understood that many other possible modifications and variations can be made without departing from the scope of the present invention as claimed. Therefore, the appended claims cover such modifications and variations that fall within the scope of the invention.

## Claims

1. A furniture, comprising:
at least one main frame (1) having a periphery provided with a plurality of hollow pipes (10) connected with each other;
a plurality of panels (40) mounted at the periphery of the main frame (1) and located between the hollow pipes (10);
a plurality of reinforcing strips (30) mounted between the hollow pipes (10) and extended through the panels (40) to secure the panels (40) to the hollow pipes (10); wherein:
each of the hollow pipes (10) has a side formed with a plurality of mounting holes (12), each of the panels (40) has an inside formed with a plurality of through holes (41), and each of the reinforcing strips (30) is extended through a respective one of the through holes (41) of each of the panels (40) and has two ends each inserted into a respective one of the mounting holes (12) of each of the hollow pipes (10),
**characterized in that**
the hollow pipes (10) are connected with each other by a plurality of mounting blocks (20), and each of the mounting blocks (20) has a side formed with a mounting hole (22), each of the mounting blocks (20) is provided with a plurality of inserts (21) each inserted into an end portion of a respective one of the hollow pipes (10) so that the hollow pipes (10) are connected with each other by the mounting blocks (20).

2. The furniture in accordance with claim 1, wherein a front panel (40a) located at a front side of the main frame (1) is pivotally mounted between the hollow pipes (10) by a respective reinforcing strip (30), so that the front panel (40a) is removable to open or close the main frame (1).

3. The furniture in accordance with claim 2, further comprising a door knob (70,90) mounted on the front panel (40a).

4. The furniture in accordance with claim 3, wherein the door knob (70) is substantially U-shaped and has an oblique first side (72) that is movable to press an inner side of a respective hollow pipe (10) and a flat second side (73) located opposite to the first side (72), the first side (72) of the door knob (70) has a distal end formed with an outwardly extended stop portion (71) that is rested on an outer face of the respective hollow pipe (10) when the first side (72) of the door knob (70) presses the inner side of the respective hollow pipe (10) to prevent an excessive movement of the front panel (40a), and the second side (73) of the door knob (70) has a distal end formed with an outwardly extended handle (74) portion to facilitate a user moving the front panel (40a).

5. The furniture in accordance with claim 3, wherein the door knob (70) is substantially L-shaped and has an oblique first side (72) that is movable to press an inner side of a respective hollow pipe (10) and a flat second side (73) located perpendicular to the first side (72), the first side (72) of the door knob (70) has a distal end formed with an outwardly extended stop portion (71) that is rested on an outer face of the respective hollow pipe (10) when the first side (72) of the door knob (70) presses the inner side of the respective hollow pipe (10) to prevent an excessive movement of the front panel (40A), and the second side (73) of the door knob (70) is provided with an outwardly extended ball seat (80) which is locked by a screw (61) to facilitate a user moving the front panel (40A).

6. The furniture in accordance with claim 3, wherein the door knob (90) includes a substantially inverted U-shaped mounting plate (93) fitted onto a corner of the front panel (40A) and having a first side formed with an oblique press portion (92) that is movable to press an inner side of a respective hollow pipe (10) and a second side formed with a protrusion (94), the press portion (92) of the mounting plate (93) of the door knob (90) has a distal end formed with an outwardly extended stop portion (91) that is rested on an outer face of the respective hollow pipe (10) when the press portion (92) presses the inner side of the respective hollow pipe (10) to prevent an excessive movement of the front panel (40A).

## Patentansprüche

1. Möbel, umfassend:
zumindest einen Hauptrahmen (1) mit einem Umfangsrand, an welchem eine Mehrzahl von hohlen Rohren (10) angeordnet ist, die miteinander verbunden sind;
eine Mehrzahl von Platten (40), die an dem Umfangsrand des Hauptrahmens (1) montiert sind und zwischen den hohlen Rohren (10) angeordnet sind;
eine Mehrzahl von Verstärkungsstreifen (30), die zwischen den hohlen Rohren (10) montiert sind und sich durch die Platten (40) hindurch erstrecken, um die Platten (40) an den hohlen Rohren (10) zu befestigen; wobei:
jedes der hohlen Rohre (10) eine Seite aufweist, in der eine Mehrzahl von Montagelöchern (12) ausgebildet ist, wobei jede der Platten (40) eine Innenseite aufweist, an der eine Mehrzahl von Durchgangslöchern (41) ausgebildet ist, und wobei jeder der Verstärkungsstreifen (30) sich durch ein jeweiliges der Durchgangslöcher (41) der jeweiligen Platte (40) hindurch erstreckt und zwei Enden aufweist, die jeweils in ein jeweiliges der Montagelöcher (12) des jeweiligen hohlen Rohrs (10) eingefügt sind;
**dadurch gekennzeichnet,**
**dass** die hohlen Rohre (10) durch eine Mehrzahl von Montageblöcken (20) miteinander verbunden sind und dass jeder der Montageblöcke (20) eine Seite aufweist, in der ein Montageloch (22) ausgebildet ist, wobei jeder der Montageblöcke (20) eine Mehrzahl von Einsätzen (21) aufweist, die jeweils in einen Endabschnitt eines jeweiligen hohlen Rohrs (10) eingefügt sind, sodass die hohlen Rohre (10) durch die Montageblöcke (20) miteinander verbunden sind.

2. Möbel nach Anspruch 1, wobei eine Frontplatte (40A), die an einer Vorderseite des Hauptrahmens (1) angeordnet ist, durch einen jeweiligen Verstärkungsstreifen (30) schwenkbar zwischen den hohlen Rohren (10) montiert ist, so dass die Frontplatte (40A) entfernt werden kann, um den Hauptrahmen (1) zu öffnen oder zu schließen.

3. Möbel nach Anspruch 2, welches ferner einen Türgriff (70, 90) umfasst, der an der Frontplatte (40A) montiert ist.

4. Möbel nach Anspruch 3, wobei der Türgriff (70) im Wesentlichen U-förmig ist und eine schräge erste Seite (72) aufweist, die derart bewegt werden kann, dass sie gegen eine Innenseite eines jeweiligen hohlen Rohres (10) drückt, und eine ebene zweite Seite (73), die gegenüberliegend der ersten Seite (72) angeordnet ist, wobei die erste Seite (72) des Türgriffs (70) ein distales Ende aufweist, an dem ein sich nach außen erstreckender Anschlagabschnitt (71) ausgebildet ist, der an einer Außenseite des jeweiligen hohlen Rohrs (10) anliegt, wenn die erste Seite (72) des Türgriffs (70) gegen die Innenseite des jeweiligen hohlen Rohrs (10) drückt, um eine übermäßige Bewegung der Frontplatte (40A) zu verhindern, und wobei die zweite Seite (73) des Türgriffs (70) ein distales Ende aufweist, an dem ein sich nach außen erstreckender Griffabschnitt (74) ausgebildet ist, um einem Anwender das Bewegen der Frontplatte (40A) zu erleichtern.

5. Möbel nach Anspruch 3, wobei der Türgriff (70) im Wesentlichen L-förmig ist und eine schräge erste Seite (72) aufweist, die derart bewegt werden kann, dass sie gegen eine Innenseite eines jeweiligen hohlen Rohrs (10) drückt, und eine ebene zweite Seite (73), die senkrecht zu der ersten Seite (72) liegt, wobei die erste Seite (72) des Türgriffs (70) ein distales Ende aufweist, an dem ein sich nach außen erstreckender Anschlagabschnitt (71) ausgebildet ist, der an einer Außenseite des jeweiligen hohlen Rohrs (10) anliegt, wenn die erste Seite (72) des Türgriffs (70) gegen die Innenseite des jeweiligen hohlen Rohrs (10) drückt, um eine übermäßige Bewegung der Frontplatte (40A) zu verhindern, und wobei an der zweiten Seite (73) des Türgriffs (70) ein sich nach außen erstreckender Kugelsitz (80) vorhanden ist, welcher durch eine Schraube (61) befestigt ist, um einem Anwender das Bewegen der Frontplatte (40A) zu erleichtern.

6. Möbel nach Anspruch 3, wobei der Türgriff (90) eine Montageplatte (93) im Wesentlichen in Form eines umgekehrten U umfasst, die auf eine Ecke der Frontplatte (40A) aufgepasst ist und eine erste Seite aufweist, an der ein schräger Andrückabschnitt (92) ausgebildet ist, welcher derart bewegt werden kann, dass er gegen eine Innenseite eines jeweiligen hohlen Rohrs (10) drückt, sowie eine zweite Seite, an der ein Vorsprung (94) ausgebildet ist, wobei der Andrückabschnitt (92) des Türgriffs (90) der Montageplatte (93) ein distales Ende aufweist, an dem ein sich nach außen erstreckender Anschlagabschnitt (91) ausgebildet ist, der an einer Außenfläche des jeweiligen hohlen Rohrs (10) anliegt, wenn der Andrückabschnitt (92) gegen die Innenseite des jeweiligen hohlen Rohrs (10) drückt, um eine übermäßige Bewegung der Frontplatte (40A) zu verhindern.

## Revendications

1. - Meuble comprenant :
- au moins un cadre principal (1) ayant une périphérie dotée d'une pluralité de tubes creux (10) reliés les uns aux autres ;
- une pluralité de panneaux (40) montés à la périphérie du cadre principal (1) et situés entre les tubes creux (10) ;
- une pluralité de bandes de renforcement (30) montées entre les tubes creux (10) et s'étendant à travers les panneaux (40) pour fixer les panneaux (40) aux tubes creux (10) ;
dans lequel chacun des tubes creux (10) a un côté comportant une pluralité de trous de montage (12), chacun des panneaux (40) ayant un intérieur comportant une pluralité de trous traversants (41), et chacune des bandes de renforcement (30) s'étend à travers un trou traversant respectif des trous traversants (41) de chacun des panneaux (40) et présente deux extrémités introduites chacune dans un trou de montage respectif des trous de montage (12) de chacun des tubes creux (10),
**caractérisé par le fait que**
les tubes creux (10) sont connectés les uns aux autres par une pluralité de blocs de montage (20), et chacun des blocs de montage (20) a un côté comportant un trou de montage (22), chacun des blocs de montage (20) est doté d'une pluralité d'inserts (21), chacun introduit dans une partie d'extrémité d'un tube creux respectif des tubes creux (10) de telle sorte que les tubes creux (10) sont reliés les uns aux autres par les blocs de montage (20).

2. - Meuble selon la revendication 1, dans lequel un panneau avant (40a) situé sur un côté avant du cadre principal (1) est monté à pivotement entre les tubes creux (10) par une bande de renforcement respective (30), de telle sorte que le panneau avant (40a) est apte à être retiré pour ouvrir ou fermer le cadre principal (1).

3. - Meuble selon la revendication 2, comprenant en outre un bouton de porte (70, 90) monté sur le panneau avant (40a).

4. - Meuble selon la revendication 3, dans lequel le bouton de porte (70) est sensiblement en forme de U et a un premier côté oblique (72) qui est déplaçable pour presser un côté interne d'un tube creux respectif (10) et un second côté plat (73) situé à l'opposé du premier côté (72), le premier côté (72) du bouton de porte (70) a une extrémité distale comportant une partie d'arrêt (71) s'étendant vers l'extérieur qui est en appui sur une face externe du tube creux respectif (10) lorsque le premier côté (72) du bouton de porte (70) presse le côté interne du tube creux respectif (10) pour empêcher un mouvement en excès du panneau avant (40a), et le second côté (73) du bouton de porte (70) a une extrémité distale comportant une partie de poignée (74) s'étendant vers l'extérieur pour faciliter à un utilisateur de déplacer le panneau avant (40a).

5. - Meuble selon la revendication 3, dans lequel le bouton de porte (70) est sensiblement en forme de L et a un premier côté oblique (72) qui est déplaçable pour presser un côté intérieur d'un tube creux respectif (10) et un second côté plat (73) situé perpendiculairement au premier côté (72), le premier côté (72) du bouton de porte (70) a une extrémité distale comportant une partie d'arrêt (71) s'étendant vers l'extérieur qui est en appui sur une face externe du tube creux respectif (10) lorsque le premier côté (72) du bouton de porte (70) presse le côté interne du tube creux respectif (10) pour empêcher un mouvement en excès du panneau avant (40A), et le second côté (73) du bouton de porte (70) est doté d'un siège de bille (80) s'étendant vers l'extérieur qui est verrouillé par une vis (61) pour faciliter à un utilisateur de déplacer le panneau avant (40A).

6. - Meuble selon la revendication 3, dans lequel le bouton de porte (90) comprend une plaque de montage (93) sensiblement en forme de U inversé, adaptée sur un coin du panneau avant (40A) et ayant un premier côté comportant une partie de pressage oblique (92) qui est déplaçable pour presser un côté interne d'un tube creux respectif (10) et un second côté comportant une saillie (94), la partie de pressage (92) de la plaque de montage (93) du bouton de porte (90) a une extrémité distale comportant une partie d'arrêt (91) s'étendant vers l'extérieur qui est en appui sur une face externe du tube creux respectif (10) lorsque la partie de pressage (92) presse le côté interne du tube creux respectif (10) pour empêcher un déplacement excessif du panneau avant (40A).
